(19) Europäisches Patentamt
European Patent Office
Office européen des brevets

(11) Publication number: 0 112 175 B1

(12) EUROPEAN PATENT SPECIFICATION

(45) Date of publication of patent specification: 29.03.89

(51) Int. Cl.[4]: **C 01 B 6/04**, C 01 B 6/06

(21) Application number: 83307642.5

(22) Date of filing: 15.12.83

(60) Divisional application 88104878 filed on 25.03.88.

# (54) Alkali metal aluminum hydride production.

(30) Priority: 15.12.82 US 450032
02.05.83 US 490791
20.05.83 US 496466

(43) Date of publication of application:
27.06.84 Bulletin 84/26

(45) Publication of the grant of the patent:
29.03.89 Bulletin 89/13

(84) Designated Contracting States:
DE FR GB IT NL

(56) References cited:
US-A-3 387 949
US-A-3 505 036

CHEMISCHES ZENTRALLBLATT, no. 51, 16th December 1964, no. 559, Berlin, DE; E.C.ASHBY et al.: "Direkte Synthese komplexer Metallhydride" & INORG. CHEM. (WASHINGTON) 2, 499-504, 1963

(73) Proprietor: ETHYL CORPORATION
Ethyl Tower 451 Florida Boulevard
Baton Rouge Louisiana 70801 (US)

(72) Inventor: Nelson, Gunner Elwood
12646 Lockhaven Avenue
Baton Rouge Louisiana (US)

(74) Representative: Baillie, Iain Cameron et al
c/o Ladas & Parry Isartorplatz 5
D-8000 München 2 (DE)

(56) References cited:
CHEMICAL ABSTRACTS, vol. 100, no. 14, April 1984, page 144, no. 105928v, Columbus, Ohio, US; & JP - A - 58 213 601 (MITSUI TOATSU CHEMICALS, INC.) 12-12-1983

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 112 175 B1

## Description

This invention relates in general to complex metal hydrides and their synthesis, and in particular, to an economical and highly advantageous process for production of alkali metal aluminum tetrahydrides.

The alkali metal aluminum hydrides have been made in the past by various techniques which have not proven to be economical for one reason or another. Various processes have been proposed for making alkali metal aluminum hydrides in both hydrocarbon and other solvents from alkali metal hydrides and from the elements. Such processes required extremely long reaction times (10—20 hours). Thus, there exists a need for a process to efficiently produce alkali metal aluminum hydrides, especially the tetrahydrides.

The tetrahydrides find use in reaction with various silicon-containing compounds to produce high purity silicon as a product of commerce primarily for semiconductor use. Of course, the alkali metal tetrahydrides have been used for other purposes as well. The worldwide production of sodium aluminum tetrahydride is quite low and we know of only one major producer.

Various metal catalysts have been used in the past for reaction promotion. These metals include titanium, scandium, and others. However, their use was suggested only for promotion of reactions to prepare organoaluminums. Many commercially available aluminums contain a trace amount of titanium, usually about 10 to 100 ppm on a weight basis. Other aluminums with high titanium (or similar metal) content are available but are not usually considered for chemical synthesis because of contamination.

US—A—3 387 949 discloses a process for the production of an alkali metal aluminum tetrahydride comprising pressure hydrogenating an alkali metal reactant and aluminum in an ether reaction medium containing a reaction-promoting quantity of a member selected from the group consisting of titanium, zirconium, hafnium, vanadium or niobium. As can be seen from the examples, the alkali metal reactant and the aluminum are present in about stoichiometric proportions. The reaction seems to be carried out to completion whereby no heel remains to be separated.

US—A—3 505 036 discloses a process for the production of an alkali metal aluminium tetrahydride comprising pressure hydrogenating an alkali metal reactant and aluminum in an ether reaction medium containing a reaction-promoting quantity of a member selected from the group consisting of titanium and zirconium. As shown in the examples, the alkali metal reactant and the aluminum are present in about stoichiometric proportions and the reaction seems to be carried out to completion.

The present invention is broadly a process for the production of an alkali metal aluminum tetrahydride comprising pressure hydrogenating an alkali metal reactant, aluminum and an alkali metal aluminate catalyst in an ether medium containing a reaction-promoting quantity of a member consisting of titanium, zirconium, hafnium, vanadium, niobium or uranium.

Approximately stoichiometric portions of alkali metal and aluminum are used in an ether solvent. The reaction mixture may then be immediately filtered after hydrogenation in the presence of a catalyst. This obviates the decantation period where an aluminum containing heel or cake is settled out and permits immediate subsequent processing of the mixture.

Advantageously, a ball mill reactor or similar high shear apparatus is not required to carry out the inventive process, as is the case with certain prior art processes.

In accordance with the present invention there is provided a process for the production of an alkali metal aluminum tetrahydride comprising pressure hydrogenating an alkali metal reactant and aluminum in an ether reaction medium containing a reaction-promoting quantity of a member consisting of titanium, zirconium, hafnium, vanadium, niobium or uranium, the process being conducted in the presence of catalytic amount of an alkali metal aluminate which is sodium aluminum triisobutyl hydride, sodium aluminum tetrachloride or sodium aluminum tetrafluoride, or is an alkali metal aluminate formed in situ from an aluminum alkyl or a lower alcohol, said alkali metal reactant and the aluminum being present in about stoichiometric proportions and the reaction is carried out to completion whereby no heel remains to be separated.

A suitable range for the reaction-promoting quantity of metal is 300—2500 parts by weight per million parts aluminum. A preferred range is 450—2000 ppm. A more preferred range is 1000—2000 ppm. The reaction of the invention generally proceeds at a faster rate with increased rates of metal. The upper point of diminishing return has not been determined. A valuable and useful aluminum powder is sold under the trade designation I-783 by Reynolds.

The titanium or other listed metal is preferably present in the aluminum as an alloy. Notably, addition of titanate esters are not very effective for the invention. Other forms may well be advantageous.

Titanium and zirconium are preferred because of their availability but uranium may be preferred where a waste source or other supply is readily available. Other similar metals may prove to be equivalent for the invention.

The ether solvents tend to hold the product alkali metal aluminum tetrahydride in suspension permitting use of the product material in a subsequent reaction without separation, centrifugation, or other recovery procedure. For example, product alkali metal aluminum tetrahydride, (preferably sodium aluminum tetrahydride) may remain in an ether such as diglyme and can be reacted with silicon tetrachloride, silicon tetrabromide, silicon tetrafluoride or other silicon containing reactant to produce silane in an advantageous manner.

The aluminum and alkali metal are present in substantially stoichiometric proportions. Since the pressure hydrogenation reaction converts essentially all of the reactants to alkali metal aluminum tetrahydride product on completion, the ether composition is in quite pure product form for subsequent reactions. The need for a settling or decanting period is obviated since no aluminum-containing heel remains. While some catalyst contamination may appear in the product/ether mixture, this can be minimized where alkali metal and/or aluminum are elements of the catalyst source material. This is accomplished by considering the amount of aluminum and/or alkali metal present in the catalyst when calculating the total amount of reactants to be used. Examples of such catalyst for this purpose are $NaAlCl_4$, $NaAlF_4$, and $AlCl_3$. In a preferred embodiment, $NaAlCl_4$ is the catalyst, giving very little contamination with chloride.

The decanting period required to remove a heel for subsequent runs is often one hour or more. The present stoichiometric feature eliminates that period. Also fresh catalyst may then be used for subsequent reactions, when desired.

Monoglyme, diglyme, and the like are preferred mediums for reaction since they are broadly usable in subsequent reactions. Also usable are mixtures of various ethers, preferably glymes or THF with hydrocarbons. Conventional hydrocarbon solvents such as toluene, pentane, hexane, heptane and the like are suitable. Toluene is preferred. A mixture of toluene and diglyme is preferred under many reaction conditions.

The alkali metals useable with the invention include sodium, lithium, and potassium. Sodium is preferred for its availability and cost.

The reaction medium may be selected from a broad range of ether-type solvents including polyethers and cyclic ethers.

More preferred are the diloweralkyl ethers of alkylene glycols such as the dimethyl ether of ethylene glycol (monoglyme), the dimethyl ether of propylene glycol, the dimethyl ether of diethylene glycol (diglyme), the dimethyl ether of triethylene glycol (triglyme), the diethyl ether of ethylene glycol, and the like. Most preferred are diglyme and monoglyme, especially diglyme.

The reaction is a pressure hydrogenation at from 690 to 34475 kPa gauge (100 psig up to 5000 psig). A preferred range is 5170 to 13790 kPa gauge (750—2000 psig). More preferred is 6900 to 13790 kPa gauge (1000—2000 psig). The most preferred pressure range depends upon materials of construction and reactants/products.

The reaction will proceed at relatively low temperature but an elevated temperature is preferred. A suitable range is 65—300°C depending upon reactants and reaction medium. A preferred range is 100—200°C and a more preferred range is 120—170°C. The most preferred temperature range depends upon choice of reactants and medium as well as materials of construction for the reactor with 140—160°C usually being most preferred.

The reaction is carried out so that product alkali metal aluminum tetrahydride is readily recovered. A suitable range of weight percent product tetrahydride in reaction medium is 5—20 percent. A preferred range is 10—15 weight percent.

The catalysts may be added or formed *in situ*, normally in a first reactive period or induction period. The catalysts found most suitable for this invention are alkali metal aluminate compounds. These catalysts include sodium aluminum triisobutyl hydride, sodium aluminum tetrachloride, sodium aluminum tetrafluoride, and aluminate compounds formed from lower alcohols and organoaluminums especially aluminum alkyls. These include alkali metal aluminates of structure I:

$$MAl[(R_1—O)_mR_2]_nH_{4-n} \qquad (I)$$

wherein M is an alkali metal, $R_2$ is alkyl, $R_1$ is alkylene, m is zero or greater, and n is one to four. The aluminates of structure I include

$$NaAl(OCH_2CH_2OCH_3)_2H_2 \text{ (vitride)} \quad \text{and} \quad NaAl[OCH(CH_3)]_2H_2.$$

Examples of those formed from aluminum alkyls are $NaAl(CH_2CH_3)_2H_2$.

The alkali metal aluminates of structure I and the alkali metal aluminum tetrahalides are preferred. A preferred aluminum alkyl is triisobutyl aluminum. $NaAlCl_4$ is most preferred. $NaAlCl_4$, like the other catalyst source materials above forms an aluminate catalyst species during the induction period of the inventive process.

The catalysts are present in 3—15 mole percent on sodium. The reaction is preferably run with sodium as the limiting reactant. Because of extremely good reactivity of the catalyst formed from $NaAlCl_4$, even less than about three (3) mole percent may be used. For commercial scale reactions, about two mole percent is advisable, although as little as about one (1) mole percent may be used.

In a preferred embodiment, $NaAlCl_4$ (soluble in most ethers including diglyme) is used as the catalyst source material. The reaction mixture is heated with excess aluminum during an induction period which forms the catalyst species and, preferably, immediately reacted to form alkali metal aluminum tetrahydride product.

According to the invention, the first cycle in the semi-continuous process for preparation of an alkali metal aluminum tetrahydride solution includes activation by catalytic species of the aluminum powder.

Of course, where a catalytic species of alkali metal aluminate is formed *in situ*, one must provide enough reactants for both catalyst formation and reaction. In subsequent steps of the cyclic process, as where aluminum and sodium or other alkali metal are depleted and then replenished, we have found it suitable to add about 1.1 gram-atom parts aluminum per gram atom part sodium. Some aluminum is lost as fines in the decanted product, especially where good settling time is not permitted.

The *in situ* catalyst activation (formation of alkali metal aluminate) is accomplished by adding a catalyst such as triisobutyl aluminum to the liquid reaction medium, preferably after addition of the sodium or other alkali metal to the medium, preferably diglyme. The reaction mixture is then pressure hydrogenated, preferably at at least about 5170 kPa gauge (750 psig) and elevated temperature, preferably 120—160°C.

When the hydrogen take-up is complete or significantly slow, the product solution is cooled.

According to a preferred embodiment of the invention, after activation, the reaction of sodium, aluminum containing 1900 ppm titanium, and hydrogen at 6900 kPa (1000 psi) and 140°C results in 75 percent conversion after only fifty minutes.

The following Examples serve to further illustrate the invention.

Example 1

The reaction vessel used was a 300 ml stainless steel autoclave with a single, magnetically driven stirrer (used at 600 RPM's). The reactor was equipped with an external heater, an internal thermocouple, and an internal cooling coil to maintain a narrow range for the reaction temperature of the exothermic reaction.

To the reactor was charged 8.0 grams (.348 moles) sodium, 35 grams (1.296 moles) aluminum powder containing 1900 ppm titanium, 110 ml diglyme and enough triisobutyl aluminum to make up 6.5 mole percent on sodium. The vessel was purged, pressure tested, heated to 140°C and pressurized to 6900 kPa gauge (1000 psig) with hydrogen. After a 50 minute induction period, the reaction was allowed to proceed until no further hydrogen uptake was observed (about 70 additional minutes). The product solution was recovered as usual.

Example 2

An active aluminum containing heel from an earlier run using triethyl aluminum in diglyme was in the reaction vessel described in Example 1. To the heel was added 7.2 grams (.313 mole) sodium, 9.3 grams (.344 mole) aluminum containing 1900 ppm titanium and 110 ml solvent diglyme. The mixture was pressure reacted with hydrogen at 6900 kPa gauge (1000 psig) and 140°C until hydrogen uptake ceased in about three and one-half hours. The vessel was cooled, vented, and the product recovered as a decant. A diglyme wash of the product was added to the decant. The decant was filtered through a medium porosity frit backed by three-eighths inch Celite. A total of 197.5 grams solution was obtained. Analysis of sample of the solution indicated 4.00% aluminum and 6.40 millimoles per gram gas. The yield was calculated at 97.5 percent.

Example 3

An active heel from an earlier run using aluminum with 500 ppm titanium and triisobutyl aluminum catalyst was in the reactor. To this heel was added 0.313 moles sodium, 0.344 moles aluminum powder containing 450 ppm titanium and 100 ml diglyme. The mixture was pressure hydrogenated at 6900 kPa gauge (1000 psig) and 140°C until the hydrogen consumption was calculated to be about 65% conversion on sodium. The vessel was quickly cooled and vented and the product solution decanted. Subsequent charges to the active heel are shown in the table below. In each case, except the last, the reaction was permitted to proceed to about 65% conversion. The last run was carried to completion (about three and one-half hours).

TABLE
Short cycle series

| Run | Moles Na | Moles Al | Time (min.) |
|---|---|---|---|
| 1 | .313 | .344 | 118 |
| 2 | .187 | .205 | 146 |
| 3 | .226 | .248 | 156 |
| 4 | .226 | .248 | 210 |
| Total | .952 | 1.005 | |

The product solutions were combined and analyzed for an overall yield of about 100%.

Several other reactions were carried out to confirm that higher reaction rates were achieved with higher content of titanium in the aluminum.

Conventional organo-aluminums such as triethyl aluminum were not as effective as the sodium aluminum tetrahalides or the sodium aluminum dialkoxy dihydrides. Isopropyl alcohol and triisobutyl aluminum proved to be sources of good catalytic species. Also, the dimethyl ether of diethylene glycol and the dimethyl ether of ethylene glycol proved to be highly preferred as compared to the dimethyl ether of triethylene glycol.

The reaction did not proceed with an alkaline earth metal hydride (magnesium hydride) rather than an alkali metal.

Notably, the alkylated catalysts may be disfavored where production of silicon (silane) is envisioned for the tetrahydride.

The following examples demonstrate preferred embodiments using both high-titanium aluminum and as best catalyst, $NaAlCl_4$. The $NaAlCl_4$ has proven to both activate the aluminum powder and provide catalyst for the hydrogenation reaction. The induction period is quite short and the hydrogen uptake is about twice as fast as with other catalysts.

Example 4

This example demonstrates the stoichiometric embodiment of the invention.

To the reaction vessel was added 1.41 grams (0.007 mole) $NaAlCl_4$, 10.9 grams (0.404 grams-atom) aluminum containing 1900 ppm titanium, 9.0 grams (0.391 gram-atom) sodium, and 120 ml dry purified diglyme. The mixture was pressure hydrogenated at 6900 kPa gauge (1000 psig) and 140°C. The hydrogen uptake reached a maximum rate of −275 kPa gauge/min (−40 psig/min) after an induction period of about 14 minutes. The total reaction period was about 100 minutes. No decanting was required. The entire reaction mixture was filtered through a medium frit and washed with 20 ml dry diglyme to provide 170.6 grams of product solution. The cake (heel) was washed with 25 ml dimethyl ether and 20 ml pentane and dried briefly under vacuum to provide 6.42 grams moist solids (heel). The yield on sodium was about 92%.

Example 5

This example demonstrates a stoichiometric embodiment with a halide catalyst, carried out in an ether/hydrocarbon mixed reaction medium. To the 300 ml reaction vessel of Example 1 was charged:

10.3 grams aluminum containing 1900 ppm titanium (0.382 gram-atom)
90 ml toluene
20 ml diglyme
3.34 grams $NaAlCl_4$ (0.017 mole)
9.6 grams sodium (0.365 gram-atom after correction for reaction with catalyst)

The reaction mixture was pressure hydrogenated at 13790 kPa gauge (2000 psig) and 140°C. Including a brief induction period, the hydrogen consumption was complete in 200 minutes. The reaction mixture separated into a solid product phase of $NaAlH_4$, an upper toluene phase, and a lower saturated solution of $NaAl_4$ in diglyme. The liquid phases were separated. The solids ($NaAlH_4$) were extracted with additional diglyme and combined with the saturated solution of diglyme to provide 163.1 grams solution total. Analysis showed 0.314 mole $NaAlH_4$ for 86.0% yield.

Example 6

This example demonstrates the use of $NaAlCl_4$ with aluminum containing only about 450 ppm titanium. Although the reaction rate was not as great, the process is still valuable with aluminum reactants of low other metal content.

To a reaction vessel was charged the same amounts of ingredients as in Example 4 except the lower titanium aluminum was used. The reaction was conducted at 140°C and 6900 kPa gauge (1000 psig). The hydrogen consumption rate was only about 30 kPa gauge/min (−4.3 psig/min). The induction period was about 60 minutes and the total reaction time was about nine hours.

**Claims**

1. A process for the production of an alkali metal aluminum tetrahydride comprising pressure hydrogenating an alkali metal reactant and aluminum in an ether reaction medium containing a reaction-promoting quantity of a member consisting of titanium, zirconium, hafnium, vanadium, niobium or uranium, the process being conducted in the presence of catalytic amount of an alkali metal aluminate which is sodium aluminum triisobutyl hydride, sodium aluminum tetrachloride or sodium aluminum tetrafluoride, or is an alkali metal aluminate formed in situ from an aluminum alkyl or a lower alcohol, said alkali metal reactant and the aluminum being present in about stoichiometric proportions and the reaction is carried out to completion whereby no heel remains to be separated.

2. The process as claimed in Claim 1 in which said reaction-promoting quantity is from 300 to 2500 parts by weight per million parts aluminum.

3. The process as claimed in Claim 1 in which said reaction-promoting quantity is from 1000 to 2000 parts by weight per million parts aluminum.

4. The process as claimed in Claim 1 in which said compound is titanium.

5. The process as claimed in Claim 4 in which said alkali metal is sodium.

6. The process as claimed in Claim 1 in which said reaction is carried out in a reaction medium which is polyether.

7. The process as claimed in Claim 6 in which said polyether is the dimethyl ether of diethylene glycol.

8. The process as claimed in Claim 1 in which said pressure hydrogenating is from 690 to 34475 kPa (100—5000 psi) gauge.

9. The process as claimed in Claim 1 in which said pressure hydrogenating is from 5170 to 13790 kPa (750 to 2000 psi) gauge.

10. The process as claimed in Claim 1 carried out at 65—300°C.

11. The process as claimed in Claim 1 carried out at 120—170°C.

12. The process as claimed in any of the preceding claims in which said alkali metal aluminate is formed from an aluminum alkyl selected from triisobutylaluminum, triethylaluminum, and trimethylaluminum.

13. The process as claimed in any of Claims 1 to 11, in which said alkali metal aluminate is a compound of the formula I:

$$MAl[(R_1—O)_mR_2]_nH_{4-n} \qquad (I)$$

wherein M is an alkali metal, $R_2$ is alkyl, $R_1$ is alkylene, m is zero or greater, and n is 1 to 4.

14. The process as claimed in Claim 13, in which said alkali metal aluminate of formula I is vitride:

$$NaAl(OCH_2CH_2OCH_3)_2H_2.$$

**Patentansprüche**

1. Verfahren zum Erzeugen eines Alkalimetallaluminiumtetrahydrids, in dem ein Alkalimetallreaktionspartner und Aluminium in einer Reaktionsmedium auf Etherbasis druckhydriert werden, das eine reaktionsfördernde Menge eines Bestandteils enthält, der aus Titan, Zirkonium, Hafnium, Vanadium, Niob oder Uran besteht, wobei das Verfahren in Gegenwart einer katalytisch wirksamen Menge eines Alkalimetallaluminats durchgeführt wird, das aus Natriumaluminiumtriisobutylhydrid, Natriumaluminiumtetrachlorid oder Natriumaluminiumtetrafluorid besteht oder ein Alkalimetallaluminat ist, das aus einem Aluminiumalkyl oder einem niederen Alkohol in situ erzeugt worden ist, wobei der Alkalimetallreaktionspartner und das Aluminium in etwa stöchiometrischen Anteilen vorhanden sind und die Reaktion vollständig durchgeführt wird, so daß kein Rückstand verbleibt.

2. Verfahren nach Anspruch 1, dadurch gekennzeichnet, daß die reaktionsfördernde Menge 300 bis 2500 Gewichtsteile pro million Teile Aluminium beträgt.

3. Verfahren nach Anspruch 1, dadurch gekennzeichnet, daß die reaktionsfördernde Menge 1000 bis 2000 Gewichtsteile pro million Teile Aluminium beträgt.

4. Verfahren nach Anspruch 1, dadurch gekennzeichnet, daß der genannte Bestandteil Titan ist.

5. Verfahren nach Anspruch 4, dadurch gekennzeichnet, daß das Alkalimetall Natrium ist.

6. Verfahren nach Anspruch 1, dadurch gekennzeichnet, daß die Reaktion in einem aus Polyether bestehenden Reaktionsmedium durchgeführt wird.

7. Verfahren nach Anspruch 6, dadurch gekennzeichnet, daß der Polyether der Dimethylether des Diethylenglykols ist.

8. Verfahren nach Anspruch 1, dadurch gekennzeichnet, daß das Druckhydrieren unter einem Überdruck von 690 bis 34 475 durchgeführt wird.

9. Verfahren nach Anspruch 1, dadurch gekennzeichnet, daß das Druckhydrieren unter einem Überdruck von 5 170 bis 12 790 kPa durchgeführt wird.

10. Verfahren nach Anspruch 1, dadurch gekennzeichnet, daß es bei 65 bis 300°C durchgeführt wird.

11. Verfahren nach Anspruch 1, dadurch gekennzeichnet, daß es bei 120 bis 170°C durchgeführt wird.

12. Verfahren nach einem der vorhergehenden Ansprüche, dadurch gekennzeichnet, daß das Alkalimetallaluminat aus einem Aluminiumalkyl erzeugt wird, das aus dem Triisobutylaluminium, Triethylaluminium und Trimethylaluminium ausgewählt ist.

13. Verfahren nach einem der Ansprüche 1 bis 11, dadurch gekennzeichnet, daß das Alkalimetallaluminat eine Verbindung der Formel I ist:

$$MAl[(R_1—O)_mR_2]_nH_{4-n} \qquad (I)$$

wobei M ein Alkalimetall, $R_2$ Alkyl, $R_1$ Alkylen, m null oder größer und n 1 bis 4 ist.

14. Verfahren nach Anspruch 13, dadurch gekennzeichnet, daß das Alkalimetallaluminat der Formel I das Vitrid:

$$NaAl(OCH_2CH_2OCH_3)_2H_2$$

ist.

**Revendications**

1. Procédé pour produire un tétrahydrure d'aluminium et de métal alcalin comprenant l'hydrogénation sous pression d'un métal alcalin réactif et d'aluminium dans un milieu réactionnel d'éther contenant une quantité, favorisant la réaction, d'un élément constitué de titane, zirconium, hafnium, vanadium, niobium ou uranium, le procédé étant réalisé en présence d'une quantité catalytique d'un aluminate de métal alcalin qui est l'hydrure de triisobutylaluminiumsodium, le tétrachlorure d'aluminiumsodium ou le tétrafluorure d'aluminiumsodium, ou c'est un aluminate de métal alcalin formé in situ à partir d'un alkylaluminium ou d'un alcool inférieur, ce métal alcalin réactif et l'aluminium étant en proportions voisines de la stoechiométrie et la réaction est réalisée complètement, ainsi il n'y a pas de reste à séparer.

2. Procédé selon la revendication 1 dans lequel ladite quantité favorisant la réaction est comprise entre 300 et 2500 parties en poids par million de parties d'aluminium.

3. Procédé selon la revendication 1 dans lequel ladite quantité favorisant la réaction est comprise entre 1000 et 2000 parties en poids par million de parties d'aluminium.

4. Procédé selon la revendication 1 dans lequel ledit composé est du titane.

5. Procédé selon la revendication 4 dans lequel ledit métal alcalin est le sodium.

6. Procédé selon la revendication 1 dans lequel ladite réaction est réalisée dans un milieu réactionnel qui est un polyéther.

7. Procédé selon la revendication 6 dans lequel ledit polyéther est l'éther diméthylique du diéthylèneglyol.

8. Procédé selon la revendication 1 dands lequel l'hydrogénation sous pression a lieu entre 690 et 34 475 kPa (100—5 000 psi).

9. Procédé selon la revendication 1 dans lequel ladite pression d'hydrogénation est comprise entre 5 170 et 13 790 kPa (750 à 2 000 psi).

10. Procédé selon la revendication 1, réalisé entre 65 et 300°C.

11. Procédé selon la revendication 1, réalisé entre 120 et 170°C.

12. Procédé selon l'une quelconque des revendications précédentes dans lequel ledit aluminate de métal alcalin est formé à partir d'un alkylaluminium choisi parmi le triisobutylaluminium, le triéthylaluminium et le triméthylaluminium.

13. Procédé selon l'une quelconque des revendications 1 à 11, dans lequel ledit aluminate de métal alcalin est un composé de formule I:

$$MAl[(R_1—O)_mR_2]_nH_{4-n} \qquad (I)$$

dans laquelle M est un métal alcalin, $R_2$ est un alkyle, $R_1$ est un alkylène, m est zéro ou supérieur, et n est de 1 à 4.

14. Procédé selon la revendication 13, dans lequel ledit aluminate de métal alcalin de formule I est le "vitride":

$$NaAl(OCH_2CH_2OCH_3)_2H_2.$$